# EUROPÄISCHE PATENTSCHRIFT

(11) **EP 3 752 409 B1**
(45) Veröffentlichungstag und Bekanntmachung des Hinweises auf die Patenterteilung: **02.08.2023**
(21) Anmeldenummer: 19728663.6
(22) Anmeldetag: 04.06.2019
(51) Int. Cl.: B62D 7/06, B62D 7/02, B60K 17/30, B60K 7/00

(54) **VERFAHREN ZUR ERMITTLUNG TATSÄCHLICHER ZUSTANDSWERTE**
METHOD FOR DETERMINING ACTUAL STATE VALUES
PROCÉDÉ DE DÉTERMINATION DE VALEURS D'ÉTAT EFFECTIVES

(30) Priorität: 25.10.2018 DE 102018126705
(43) Veröffentlichungstag der Anmeldung: 23.12.2020
(73) Patentinhaber: EBM-PAPST ST. GEORGEN GMBH & CO. KG, 78112 St. Georgen (DE)
(72) Erfinder: HIRT, Markus, 78048 Villingen-Schwenningen (DE); JESKE, Frank, 78112 St. Georgen (DE); HORNBERGER, Jörg, 72280 Dornstetten-Aach (DE); BITZER, Manfred, 78112 St. Georgen (DE)
(74) Vertreter: Staeger & Sperling Partnerschaftsgesellschaft mbB
(86) Internationale Anmeldenummer: PCT/EP2019/064412
(87) Internationale Veröffentlichungsnummer: WO 2020/083536

(56) Entgegenhaltungen:
- DE-A1-102016 007 445
- DE-U1-202008 004 190
- US-A1- 2013 333 966

## Beschreibung

Die Erfindung betrifft ein Verfahren zur Ermittlung von tatsächlichen bzw. abgesicherten Zustandswerten bei einem Radantriebsmodul.

Im Stand der Technik ist bereits eine Vielzahl von Verfahren zur Ermittlung von Sensordaten bzw. Zustandswerten bekannt. Soll für eine Weitergabe oder Weiterverarbeitung solcher Zustandswerte sichergestellt sein, dass die ermittelten Zustandswerte mit den tatsächlichen Zustandswerten übereinstimmen, ist es bei den im Stand der Technik bekannten Anwendungen verbreitet zertifizierte Sensoren bzw. Zustandswert-Quellen zu verwenden, welche durch vorherige Prüfung und entsprechende Auslegung sicher die tatsächlichen Zustandswerte ermitteln und weiterleiten. Die Auslegung, Herstellung und anschließende Zertifizierung solcher Sensoren bzw. Zustandswert-Quellen ist jedoch aufwändig und kostenintensiv. Systeme, bei welchen solche zertifizierten Komponenten und insbesondere mehrere solcher Komponenten zum Einsatz kommen, sind in ihrer Herstellung dadurch ebenfalls kostenintensiv.

Dies gilt insbesondere bei einem Radantriebsmodul, bei welchem für die Berechnung der Fahr- und Lenkbewegungen eines Rades des Radantriebsmoduls dessen gegenwärtiger Lenkwinkel und dessen gegenwärtige Drehzahl bestimmt werden sollen.

Radantriebsmodule mit Überlagerungsgetriebe sind beispielsweise aus den Dokumenten DE 10 2016 007445 A1 und DE 20 2008 004190 U1 bekannt. Insbesondere offenbart das Dokument DE 10 2016 007445 A1 den Oberbegriff des Anspruchs 1.

Der Erfindung liegt deshalb die Aufgabe zugrunde, die vorgenannten Nachteile zu überwinden und ein Verfahren zur Ermittlung tatsächlicher Zustandswerte eines Rades eines Radantriebsmoduls bereitzustellen, bei dem die einzelnen Informationsquellen keine spezielle Absicherung aufweisen müssen, die ermittelten Zustandswerte jedoch den tatsächlichen Zustandswerten entsprechen.

Diese Aufgabe wird durch die Merkmalskombination gemäß Patentanspruch 1 gelöst.

Erfindungsgemäß wird ein Verfahren zur Ermittlung von Zustandswerten eines Rades eines Radantriebsmoduls vorgeschlagen. Das Radantriebsmodul umfasst zusätzlich zu dem Rad ein Überlagerungsgetriebe, einen ersten Elektromotor und einen zweiten Elektromotor sowie zumindest einen ersten Sensor zur Erfassung von Zustandswerten des ersten Elektromotors und zumindest einen zweiten Sensor zur Erfassung von Zustandswerten des zweiten Elektromotors. Darüber hinaus umfasst das Radmodul zumindest einen dritten Sensor zur Erfassung von Zustandswerten des Rades und/oder einen vierten und fünften Sensor, wobei der vierte Sensor Zustandswerte des ersten Elektromotors und der fünfte Sensor Zustandswerte des zweiten Elektromotors erfasst. Bei dem Radantriebsmodul sind der erste und der zweite Elektromotor ausgebildet, das Rad gemeinsam mittels des Überlagerungsgetriebes um eine Radachse anzutreiben und um eine zu der Radachse orthogonale Lenkachse zu lenken. Bei dem Verfahren werden die durch den ersten Sensor und die durch den zweiten Sensor ermittelten Zustandswerte und/oder die durch den vierten und fünften Sensor ermittelten Zustandswerte und/oder die durch den dritten Sensor ermittelten Zustandswerte und/oder Steuersignale zur Ansteuerung des ersten und/oder zweiten Elektromotors jeweils in eine einheitliche und somit vergleichbare Einheit umgerechnet. Anschließend werden die in die einheitliche Einheit umgerechneten Zustandswerte miteinander verglichen und aus dem Vergleich tatsächliche Zustandswerte des Rades bestimmt. Die ermittelten Zustandswerte werden durch den Abgleich bzw. Vergleich untereinander plausibilisiert und somit wird abgesichert, dass die weitergeleiteten Zustandswerte die tatsächlichen Zustandswerte des Rades sind. Die zum Vergleich verwendeten Informationen bzw. Zustandswerte sind somit redundant vorhanden und können aus mehreren Informationsquellen stammen. Die Informationsquellen, wie beispielsweise Sensoren oder eine Motorelektronik zur Steuerung des ersten und/oder zweiten Elektromotors, können hierzu auch redundant vorhanden sein.

Daraus ergeben sich drei Konfigurationen des Radantriebsmoduls. Das Radantriebsmodul umfasst in einer ersten Konfiguration zumindest einen ersten Sensor, zumindest einen zweiten Sensor und zumindest einen dritten Sensor umfasst. In einer zweiten Konfiguration umfasst das Radantriebsmodul zumindest einen ersten Sensor, zumindest einen zweiten Sensor sowie einen vierten und fünften Sensor. Ferner umfasst das Radantriebsmodul in einer dritten Konfiguration zumindest einen ersten Sensor, zumindest einen zweiten Sensor, zumindest einen dritten Sensor sowie einen vierten und fünften Sensor.

Das erfindungsgemäße Verfahren zur Ermittlung von Zustandswerten des Radantriebsmoduls in erster Konfiguration sieht hierbei vor, dass die durch den ersten Sensor und die durch den zweiten Sensor ermittelten Zustandswerte sowie die durch den dritten Sensor ermittelten Zustandswerte und optional Steuersignale zur Ansteuerung des ersten und zweiten Elektromotors jeweils in eine einheitliche Einheit umgerechnet werden.

Das erfindungsgemäße Verfahren zur Ermittlung von Zustandswerten des Radantriebsmoduls in zweiter Konfiguration sieht hierbei vor, dass die durch den ersten Sensor und die durch den zweiten Sensor ermittelten Zustandswerte sowie die durch den vierten Sensor und fünften Sensor ermittelten Zustandswerte und optional Steuersignale zur Ansteuerung des ersten und zweiten Elektromotors jeweils in eine einheitliche Einheit umgerechnet werden.

Das erfindungsgemäße Verfahren zur Ermittlung von Zustandswerten des Radantriebsmoduls in dritter Konfiguration sieht hierbei vor, dass die durch den ersten Sensor und die durch den zweiten Sensor ermittelten Zustandswerte sowie die durch den dritten Sensor ermittelten Zustandswerte sowie die durch den vierten Sensor und fünften Sensor ermittelten Zustandswerte und optional Steuersignale zur Ansteuerung des ersten und zweiten Elektromotors jeweils in eine einheitliche Einheit umgerechnet werden.

Weiter ist jeweils vorgesehen, dass die in die einheitliche Einheit umgerechneten Zustandswerte miteinander verglichen werden und aus dem Vergleich tatsächliche Zustandswerte des Rades bestimmt werden.

Der grundlegende Gedanke hierbei ist es, nicht mehr alle einzelnen Komponenten des Systems "Radantriebsmodul" zertifizieren und absichern zu müssen, sondern lediglich den Teil des Systems, beispielsweise eine Auswerteeinheit, welche die durch die weiteren Komponenten ermittelten Zustandswerte plausibilisiert.

Hierfür können beispielsweise der erste und der vierte Sensor eine Drehzahl des ersten Elektromotors oder einen anderen Zustandswert, aus dem auf die Drehzahl des ersten Elektromotors geschlossen werden kann, ermitteln und durch das Verfahren aus den beiden Werten eine tatsächliche Drehzahl des ersten Elektromotors bestimmt werden. Analog wird aus den durch den zweiten und fünften Sensor ermittelten Zustandswerten ein tatsächlicher Zustandswert bzw. eine tatsächliche Drehzahl des zweiten Elektromotors bestimmt. Aus den tatsächlichen Drehzahlen des ersten und zweiten Elektromotors können dann mittels einer Umrechnung über die Übersetzung des Überlagerungsgetriebes der tatsächliche Lenkwinkel und die tatsächliche Raddrehzahl des Rades bestimmt werden.

Alternativ kann bei einer Lösung ohne den vierten und fünften Sensor auch eine Raddrehzahl und/oder ein Lenkwinkel des Rades mit den Zustandswerten des ersten und zweiten Sensors bestimmt werden, wobei bei dem Verfahren dann aus einem Vergleich mit durch den dritten und/oder sechsten Sensor ermittelten Zustandswerten wiederum abgesicherte und somit tatsächliche Zustandswerte des Rades bestimmt werden.

Bei einer Ausbildungsvariante des Verfahrens ist vorgesehen, dass die tatsächlichen bzw. abgesicherten Zustandswerte eine tatsächliche Raddrehzahl des Rades um die Radachse und ein tatsächlicher Lenkwinkel des Rades um die Lenkachse sind.

Eine vorteilhafte Variante des Verfahrens sieht vor, dass die verarbeiteten bzw. miteinander verglichenen Informationen durch redundant vorhandende Sensoren ermittelt werden und insbesondere der zumindest eine erste Sensor und/oder der zumindest eine zweite Sensor und/oder der zumindest eine dritte Sensor jeweils mehrfach bzw. redundant vorhanden sind.

Bei einer ebenfalls vorteilhaften Weiterbildung ist von Vorteil vorgesehen, dass der zumindest eine erste Sensor eine Rotorposition eines Rotors des ersten Elektromotors und/oder eine Drehzahl des ersten Elektromotors erfasst. Darüber hinaus erfasst der zumindest eine zweite Sensor eine Rotorposition eines Rotors des zweiten Elektromotors und/oder eine Drehzahl des zweiten Elektromotors. Bei dem Verfahren werden/wird anschließend aus der Rotorposition des ersten Elektromotors und des zweiten Elektromotors und/oder der Drehzahl des ersten und des zweiten Elektromotors eine berechnete Raddrehzahl des Rades um die Radachse und/oder ein berechneter Lenkwinkel des Rades um die Lenkachse bestimmt.

Bei dem Verfahren ist es darüber hinaus vorteilhaft, wenn bei einer Ausführungsvariante der erste und der zweite Sensor jeweils mit dem jeweiligen Elektromotor und der jeweils zugehörigen Motorelektronik als jeweils eine Baugruppe ausgebildet sind. Darüber hinaus ist hierbei vorgesehen, dass der vierte und fünfte Sensor an dem jeweiligen Elektromotor außerhalb, also nicht als Bestandteil der jeweiligen Baugruppe vorgesehen bzw. angeordnet sind.

Der zumindest eine dritte Sensor erfasst vorzugsweise einen Lenkwinkel des Rades um die Lenkachse. Alternativ oder zusätzlich kann ein weiterer, sechster Sensor die Raddrehzahl des Rades um die Radachse erfassen.

Die berechnete Raddrehzahl wird bei einer Variante des Verfahrens mit der durch den sechsten Sensor erfassten Raddrehzahl verglichen. Alternativ oder zusätzlich wird der berechnete Lenkwinkel mit dem durch den dritten Sensor erfassten Lenkwinkel verglichen.

Bei einer Übereinstimmung der berechneten und der durch den sechsten Sensor erfassten Raddrehzahl miteinander oder einer Abweichung der berechneten und der erfassten Raddrehzahl voneinander innerhalb eines vorbestimmten Raddrehzahl-Toleranzbereichs wird bei dem Verfahren vorzugsweise ein Mittelwert der berechneten und erfassten Raddrehzahl als tatsächlicher Zustandswert des Rades gebildet.

Analog gilt bei einer Variante, dass bei einer Übereinstimmung der berechneten und der durch den dritten Sensor erfassten Lenkwinkels miteinander oder einer Abweichung des berechneten und des erfassten Lenkwinkels voneinander innerhalb eines vorbestimmten Lenkwinkel-Toleranzbereichs ein Mittelwert des berechneten und erfassten Lenkwinkels als tatsächlicher Zustandswert des Rades gebildet wird.

Weichen die berechneten und erfassten Raddrehzahlen und/oder die berechneten und erfassten Lenkwinkel zu stark voneinander ab und liegen somit außerhalb des jeweiligen Toleranzbereichs, kann auch vorgesehen sein, dass durch das Verfahren eine Abweichungsmeldung weitergegeben wird.

Eine weitere Ausführungsvariante des Verfahren sieht vorteilhafterweise vor, dass der dritte Sensor und/oder der sechste Sensor zumindest doppelt vorhanden ist und die von den dritten Sensoren erfassten Lenkwinkel und/oder die von den sechsten Sensoren erfassten Raddrehzahlen jeweils untereinander verglichen werden. Anschließend wird bei einer jeweiligen Übereinstimmung der durch die dritten Sensoren erfassten Lenkwinkel und/oder der durch die sechsten Sensoren erfassten Raddrehzahlen miteinander oder einer jeweiligen Abweichung voneinander innerhalb eines vorbestimmten Lenkwinkel-Toleranzbereichs und/oder Raddrehzahl-Toleranzbereichs ein Mittelwert der erfassten Lenkwinkel und/oder Raddrehzahlen als tatsächlicher Zustandswert des Rades gebildet. Vorzugsweise wird dieser anschließend an die jeweils übergeordnete Steuerung weitergeleitet.

Bei dem Verfahren können auch mehr als zwei Zustandswerte miteinander verglichen werden. Beispielsweise kann ein berechneter Zustandswert mit zwei gemessenen Zustandswerten verglichen werden.

Die berechneten Zustandswerte müssen nicht von einem Sensor abgeleitet werden, sondern können beispielsweise aus den an die Elektromotoren übermittelten Solldrehzahlen bestimmt werden.

Nach der Bestimmung des tatsächlichen bzw. abgesicherten Zustandswertes oder der tatsächlichen bzw. abgesicherten Zustandswerte durch das Verfahren wird/werden diese/r bei einer vorteilhaften Weiterbildung an eine Applikation bzw. Steuerelektronik zur Steuerung des Radantriebsmoduls weitergeleitet.

Um das Radantriebsmodul schnell und kosteneffizient warten und individualisieren zu können ist es zudem vorteilhaft, wenn das Radantriebsmodul in weitere als Modul austauschbare Baugruppen unterteilt ist. Beispielsweise kann der erste und zweite Elektromotor mit einer jeweils zugehörigen ersten bzw. zweiten Motorsteuerung eine jeweilige erste bzw. zweite Motorbaugruppe bilden.

Darüber hinaus kann durch die Steuerungslogik zur Steuerung der Elektromotoren ein Verfahren implementiert sein, wodurch von der Steuerungslogik von der übergeordneten Applikation beispielsweise nur Sollgeschwindigkeit bzw. Solldrehzahl des Rades um die Radachse sowie ein Solllenkwinkel des Rades um die Lenkachse oder andere auf das Rad bezogene Zustandswerte empfangen werden und durch das Verfahren jeweils Motorsollwerte zur Ansteuerung der beiden Elektromotoren bestimmt werden.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: ein von einem ersten und einem zweiten Elektromotor durch ein Überlagerungsgetriebe angetriebenes Rad;
- Fig. 2: eine schematische Darstellung des Radantriebsmoduls.

Die Figuren sind beispielhaft schematisch. Gleiche Bezugszeichen in den Figuren weisen auf gleiche funktionale und/oder strukturelle Merkmale hin.

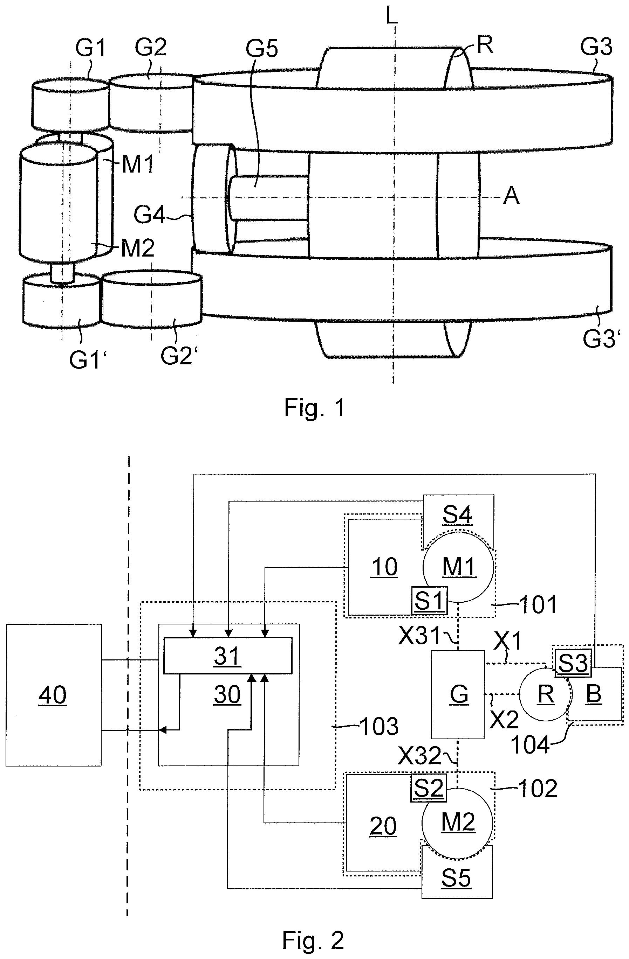

In Figur 1 sind das Rad R, der erste und zweite Elektromotor M1, M2 sowie das Überlagerungsgetriebe G zum Antrieb und Lenken des Rades R durch die beiden Elektromotoren M1, M2 dargestellt. Dabei wird durch die Figur 1 nur eine mögliche Ausbildungsalternative des Antriebs des Rades R um die Radachse A und die Lenkachse L durch den ersten und zweiten Elektromotor M1, M2 illustriert. Beispielsweise kann das Rad R unterhalb der Antriebszahnkränze G3, G3' angeordnet sein oder die Elektromotoren M1, M2 eine andere Übersetzung auf die Antriebszahnkränze G3, G3' sowie eine andere Orientierung aufweisen. Das Überlagerungsgetriebe G umfasst in dem dargestellten Beispiel die Ritzel G1, G1', die Zwischenräder G2, G2`, die Antriebszahnkränze G3, G3' sowie das Abtriebszahnrad G4 und die Abtriebswelle G5. Darüber hinaus kann das Überlagerungsgetriebe G bei anderen Ausführungsvarianten auch noch weitere Komponenten umfassen.

Der erste und der zweite Elektromotor M1, M2 treiben den ersten und den zweiten Antriebszahnkranz G3, G3' an. Der erste Elektromotor M1 ist bei der gezeigten Ausführungsform entgegengesetzt zu dem zweiten Elektromotor M2 angeordnet, wobei die Elektromotoren M1, M2 jeweils ein eigenes Motorgetriebe umfassen können. Über jeweils eine Motorwelle sind die Elektromotoren M1, M2 mit jeweils einem Ritzel G1, G1' verbunden.

Das erste Ritzel G1 greift mit seiner Verzahnung in eine Verzahnung eines ersten Zwischenrades G2 ein, welches mit seiner Verzahnung in eine Antriebsverzahnung des ersten Antriebszahnkranzes G3 eingreift, so dass durch eine Rotation des ersten Ritzels G1 der erste Antriebszahnkranz G3 von dem ersten Elektromotor M1 angetrieben um die Rotationsachse bzw. Lenkachse L rotierbar ist.

Analog gilt das gleiche für den zweiten Antriebszahnkranz G3'. Das zweite Ritzel G1' greift mit seiner Verzahnung in eine Verzahnung eines zweiten Zwischenrades G2' ein, welches mit seiner Verzahnung in eine Antriebsverzahnung des zweiten Antriebszahnkranzes G3' eingreift, womit durch eine Rotation des zweiten Ritzels G1' der zweite Antriebszahnkranz G3' von dem zweiten Elektromotor M2 angetrieben um die Rotationsachse bzw. Lenkachse L rotierbar ist.

Zwischen dem ersten und dem zweiten Antriebszahnkranz G3, G3' ist ein Abtriebszahnrad G4 angeordnet, welches mit seiner Verzahnung sowohl in eine zu dem Abtriebszahnrad G4 weisende Verzahnung des ersten Antriebszahnkranzes G3 als auch in eine zu dem Abtriebszahnrad G4 weisende Verzahnung des zweiten Antriebszahnkranzes G3' eingreift. Die Rotation des Abtriebszahnrades G4 (dritte Rotation) ist folglich sowohl von der Rotation des ersten Antriebszahnkranzes G3 (erste Rotation) als auch von der Rotation des zweiten Antriebszahnkranzes G3' (zweite Rotation) bestimmt.

Von dem Abtriebszahnrad G4 erstreckt sich eine mit dem Abtriebszahnrad G4 drehfest verbundene Abtriebswelle G5 entlang einer Radachse A in Richtung der Rotationsachse bzw. der Lenkachse L der Antriebszahnkränze G3, G3'. An einer von dem Abtriebszahnrad G4 entlang der Radachse A beabstandeten Seite ist das Rad R drehfest mit der Abtriebswelle G5 verbunden, wodurch eine Rotation (dritte Rotation) des Abtriebszahnrades G4 über die Abtriebswelle G5 auf das Rad R übertragen wird. Das Rad R ist wie dargestellt abschnittsweise zwischen dem ersten Antriebszahnkranz G3 und dem zweiten Antriebszahnkranz G3' aufgenommen, welche entlang ihrer Rotationsachse L beabstandet sind und zwischen sich einen Radaufnahmeraum aufspannen. Beide Antriebszahnkränze G3, G3' weisen eine sich entlang der Rotationsachse L durch den jeweiligen Antriebszahnkranz G3, G3' erstreckende Kranzöffnung auf. Das Rad R erstreckt sich zumindest auf seiner dem Boden zugewandten Seite durch die jeweilige Kranzöffnung, womit das Rad R im Wesentlichen fünf Abschnitte aufweist. Ein erster Abschnitt, mit welchen das Rad R zwischen den Antriebszahnkränzen angeordnet ist, zwei zweite Abschnitte, mit welchen das Rad R in den Kranzöffnungen der Antriebszahnkränze G3, G3' angeordnet ist, und zwei dritte Abschnitte, mit welchen das Rad R entlang der Rotationsachse L außerhalb der Antriebszahnkränze G3, G3' liegt. Die Anordnung des Rades R in dem Radaufnahmeraum führt zu drei vorteilhaften Effekten. Der Bauraum des Radantriebsmoduls wird deutlich reduziert, da das Rad R bei einer Lenkbewegung die Antriebszahnkränze G3, G3' nicht umlaufen muss, und der mögliche Lenkwinkel wird erweitert, da das Rad R in den Antriebszahnkränzen G3, G3' um 360° rotiert werden kann, ohne dass die Lenkbewegung bzw. Rotation um die Rotationsachse L durch die Zwischenräder G2, G2' begrenzt ist. Hinzukommt, dass das Rad R von dem Radantriebsmodul 1 bzw. von dem ersten und zweiten Antriebszahnkränzen G3, G3' geschützt wird, da diese einen Käfig um das Rad R bilden.

In Figur 2 ist das Radantriebsmodul schematisch dargestellt. Durch den Antrieb des Rades R um die Lenkachse L und die Radachse A wird am bzw. durch das Rad R eine Fahrfunktion X2 und eine Lenkfunktion X1 bereitgestellt. Zur Bereitstellung der Lenk- und Fahrfunktion X1, X2 mittels des Überlagerungsgetriebes G, wird dieses durch den ersten und zweiten Elektromotor M1, M2 mittels der ersten und zweiten Wirkverbindung X31, X32 angetrieben.

Die erste bzw. zweite Motorbaugruppe 101, 102 umfasst in der gezeigten Ausführungsform jeweils eine erste bzw. zweite Motorelektronik 10, 20 zur unmittelbaren Ansteuerung des jeweiligen Elektromotors M1, M2 sowie einen ersten bzw. zweiten Sensor S1, S2 durch welchen Motorwerte, wie beispielsweise die Rotorposition des jeweiligen Elektromotors M1, M2 ermittelt werden. Bei der gezeigten Ausführungsform ist der erste bzw. zweite Sensor S1, S2 unmittelbar mit der jeweiligen Motorelektronik 10, 20 gekoppelt, wobei die durch die Sensoren S1, S2 ermittelten Motorwerte zur Steuerung des jeweiligen Elektromotors M1, M2 verwendet werden und die Motorwerte bei Bedarf auch an weitere Baugruppen geleitet werden können.

Die erste und zweite Motorbaugruppe 101, 102 sind über als durchgehende Linien symbolisierte Busleitungen mit der Zentralbaugruppe 103 verbunden, welche eine Zentralelektronik 30 umfasst.

Zur Steuerung der Elektromotoren M1, M2 ist bei der in Figur 2 gezeigten Ausführungsform zudem ein vierter bzw. fünfter Sensor S4, S5 an den Elektromotoren M1, M2 zur Erfassung der Drehzahl der Elektromotoren vorgesehen. Der vierte Sensor S4 ist dem ersten Elektromotor M1 zugeordnet, jedoch nicht Teil der ersten Motorbaugruppe 101, und der fünfte Sensor S5 ist dem zweiten Elektromotor M2 zugeordnet, jedoch nicht Teil der zweiten Motorbaugruppe 102. Der vierte und fünfte Sensor S4, S5 sind bei der gezeigten Ausführungsform jeweils mit der Zentralelektronik 30 verbunden.

Um im Falle eines Defekts des ersten oder zweiten Elektromotors M1, M2 einen sicheren Zustand erreichen zu können ist zudem eine Sicherheitsbremse B vorgesehen, welche mit einem dritten Sensor S3 zu einer Bremsbaugruppe 104 zusammengefasst sein kann. Durch die Sicherheitsbremse B kann zumindest die Fahrfunktion X2 blockiert bzw. die Rotation des Rades R um die Radachse A gebremst werden, so dass das Radantriebsmodul bzw. das Rad R zum Stillstand gebracht und ein sicherer Zustand hergestellt werden kann. Der dritte Sensor S3 erfasst dabei unmittelbar Zustandswerte des Rades R, wie beispielsweise den Lenkwinkel des Rades R um die Lenkachse L, wobei die Rotationsgeschwindigkeit oder Drehzahl des Rades R um die Radachse A von einem nicht gezeigten sechsten Sensor erfasst werden kann. Die erfassten Werte werden über die Verbindung der Bremsbaugruppe 104 mit der Zentralelektronik 30 dieser bzw. den weiteren Baugruppen zur Verfügung gestellt bzw. an diese übertragen.

Zur Umsetzung des Verfahrens ist in der dargestellten Zentralelektronik 30 eine Auswerteeinheit 31 bzw. ein "Safety Chip" integriert, in welchem vorbestimmte Zustandswerte verglichen werden um die tatsächlichen bzw. abgesicherten Zustandswerte des Rades R zu bestimmen und an die Applikationselektronik 40 weiterzuleiten.

In dem gezeigten Ausführungsbeispiele wird aus den durch die ersten und zweiten Sensoren S1, S2 ermittelten Zustandswerte des ersten und zweiten Elektromotors M1, M2 die jeweilige Drehzahl der Elektromotoren M1, M2. Die Drehzahlen der Elektromotoren M1, M2, welche aus dem ersten und zweiten Sensor S1, S2 ermittelt wurden, können anschließend mit den von dem vierten und fünften Sensor S4, S5 unmittelbar gemessenen Drehzahlen verglichen werden. Nach dem Vergleich oder auch unmittelbar kann aus den Drehzahlen des ersten und zweiten Elektromotors M1, M2 und über das durch das Überlagerungsgetriebe bereitgestellte Übersetzungsverhältnis die Drehzahl des Rades R und eine stattfindende Lenkbewegung sowie bei einer kontinuierlichen Ermittlung aus der Lenkbewegung ein Lenkwinkel des Rades R ermittelt werden. Zusätzlich kann die ermittelte Drehzahl des Rades R anschließend durch die Auswerteeinheit 31 mit der durch den dritten Sensor S3 gemessenen Drehzahl des Rades R verglichen werden. Kommt es zu keiner Abweichung oder einer Abweichung innerhalb eines Toleranzbereichs wird aus der gemessenen Drehzahl und der ermittelten Drehzahl ein Mittelwert gebildet und der Mittelwert der Drehzahlen als abgesicherter bzw. tatsächlicher Zustandswert bzw. als tatsächliche Drehzahl an die Applikationselektronik 40 weitergeleitet.

Da die Drehzahl des Rades R vor dem Weiterleiten durch die Auswerteeinheit 31 plausibilisiert wurde, ist es nicht notwendig, für die Erfassung der Zustandswerte selbst besonders sichere Komponenten zu verwenden.

## Patentansprüche

1. Verfahren zur Ermittlung von Zustandswerten eines Rades (R) eines Radantriebsmoduls umfassend das Rad (R), ein Überlagerungsgetriebe (G), einen ersten Elektromotor (M1) und einen zweiten Elektromotor (M2),
wobei der erste und der zweite Elektromotor (M1, M2) ausgebildet sind, das Rad (R) gemeinsam mittels des Überlagerungsgetriebes (G) um eine Radachse (A) anzutreiben und um eine zu der Radachse (A) orthogonale Lenkachse (L) zu lenken, **dadurch gekennzeichnet, dass**
das Radantriebsmodul ferner zumindest einen ersten Sensor (S1) zur Erfassung von Zustandswerten des ersten Elektromotors (M1) und zumindest einen zweiten Sensor (S2) zur Erfassung von Zustandswerten des zweiten Elektromotors (M2) sowie
zumindest einen dritten Sensor (S3) zur Erfassung von Zustandswerten des Rades (R) und/oder
einen vierten und fünften Sensor (S4, S5) umfasst, wobei der vierte Sensor (S4) Zustandswerte des ersten Elektromotors (M1) und der fünfte Sensor (S5) Zustandswerte des zweiten Elektromotors (M2) erfasst,
so dass das Radantriebsmodul in einer ersten Konfiguration zumindest einen ersten Sensor (S1), zumindest einen zweiten Sensor (S2) und zumindest einen dritten Sensor (S3) umfasst,
das Radantriebsmodul in einer zweiten Konfiguration zumindest einen ersten Sensor (S1), zumindest einen zweiten Sensor (S2) sowie einen vierten und fünften Sensor (S4, S5) umfasst und
das Radantriebsmodul in einer dritten Konfiguration zumindest einen ersten Sensor (S1), zumindest einen zweiten Sensor (S2), zumindest einen dritten Sensor (S3) sowie einen vierten und fünften Sensor (S4, S5) umfasst,
wobei bei dem Verfahren zur Ermittlung von Zustandswerten des Radantriebsmoduls in erster Konfiguration die durch den ersten Sensor (S1) und die durch den zweiten Sensor (S2) ermittelten Zustandswerte sowie die durch den dritten Sensor (S3) ermittelten Zustandswerte und optional Steuersignale zur Ansteuerung des ersten und zweiten Elektromotors (M1, M2) jeweils in eine einheitliche Einheit umgerechnet werden,
wobei bei dem Verfahren zur Ermittlung von Zustandswerten des Radantriebsmoduls in zweiter Konfiguration die durch den ersten Sensor (S1) und die durch den zweiten Sensor (S2) ermittelten Zustandswerte sowie die durch den vierten Sensor (S4) und fünften Sensor (S5) ermittelten Zustandswerte und optional Steuersignale zur Ansteuerung des ersten und zweiten Elektromotors (M1, M2) jeweils in eine einheitliche Einheit umgerechnet werden,
wobei bei dem Verfahren zur Ermittlung von Zustandswerten des Radantriebsmoduls in dritter Konfiguration die durch den ersten Sensor (S1) und die durch den zweiten Sensor (S2) ermittelten Zustandswerte sowie die durch den dritten Sensor (S3) ermittelten Zustandswerte sowie die durch den vierten Sensor (S4) und fünften Sensor (S5) ermittelten Zustandswerte und optional Steuersignale zur Ansteuerung des ersten und zweiten Elektromotors (M1, M2) jeweils in eine einheitliche Einheit umgerechnet werden,
und die in die einheitliche Einheit umgerechneten Zustandswerte miteinander verglichen werden und aus dem Vergleich tatsächliche Zustandswerte des Rades (R) bestimmt werden.

2. Verfahren nach dem vorhergehenden Anspruch, wobei
die tatsächlichen Zustandswerte eine tatsächliche Raddrehzahl des Rades (R) um die Radachse (A) und ein tatsächlicher Lenkwinkel des Rades (R) um die Lenkachse (L) sind.

3. Verfahren nach einem der vorhergehenden Ansprüche, wobei
der zumindest eine erste Sensor (S1) und/oder der zumindest eine zweite Sensor (S2) und/oder der zumindest eine dritte Sensor (S3) jeweils mehrfach vorhanden sind.

4. Verfahren nach einem der vorhergehenden Ansprüche, wobei
der zumindest eine erste Sensor (S1) eine Rotorposition eines Rotors des ersten Elektromotors (M1) und/oder eine Drehzahl des ersten Elektromotors (M1) erfasst, und
der zumindest eine zweite Sensor (S2) eine Rotorposition eines Rotors des zweiten Elektromotors (M2) und/oder eine Drehzahl des zweiten Elektromotors (M2) erfasst, und
bei dem Verfahren aus der Rotorposition des ersten Elektromotors (M1) und des zweiten Elektromotors (M2) und/oder der Drehzahl des ersten und des zweiten Elektromotors (M1, M2) eine berechnete Raddrehzahl des Rades (R) um die Radachse (A) und/oder ein berechneter Lenkwinkel des Rades (R) um die Lenkachse (L) bestimmt werden/wird.

5. Verfahren nach einem der vorhergehenden Ansprüche, wobei
der erste und der zweite Sensor (S1, S2) jeweils mit dem jeweiligen Elektromotor (M1, M2) und der jeweils zugehörigen Motorelektronik (10, 20) als jeweils eine Baugruppe ausgebildet sind und
der vierte und fünfte Sensor (S4, S5) an dem jeweiligen Elektromotor (M1, M2) außerhalb der jeweiligen Baugruppe angeordnet sind.

6. Verfahren nach einem der vorhergehenden Ansprüche, wobei
der zumindest eine dritte Sensor (S3) einen Lenkwinkel des Rades (R) um die Lenkachse (L) erfasst und/oder
ein sechster Sensor eine Raddrehzahl des Rades (R) um die Radachse (A) erfasst.

7. Verfahren nach dem vorhergehenden Anspruch, wobei
die berechnete Raddrehzahl mit der durch den sechsten Sensor erfassten Raddrehzahl verglichen wird und/oder
der berechnete Lenkwinkel mit dem durch den dritten Sensor (S3) erfassten Lenkwinkel verglichen wird.

8. Verfahren nach dem vorhergehenden Anspruch, wobei
bei einer Übereinstimmung der berechneten und der durch den sechsten Sensor erfassten Raddrehzahl miteinander oder einer Abweichung der berechneten und der erfassten Raddrehzahl voneinander innerhalb eines vorbestimmten Raddrehzahl-Toleranzbereichs ein Mittelwert der berechneten und erfassten Raddrehzahl als tatsächlicher Zustandswert des Rades (R) gebildet wird.

9. Verfahren nach dem vorhergehenden Anspruch 6, wobei
bei einer Übereinstimmung der berechneten und der durch den dritten Sensor (S3) erfassten Lenkwinkels miteinander oder einer Abweichung des berechneten und des erfassten Lenkwinkels voneinander innerhalb eines vorbestimmten Lenkwinkel-Toleranzbereichs ein Mittelwert des berechneten und erfassten Lenkwinkels als tatsächlicher Zustandswert des Rades (R) gebildet wird.

10. Verfahren nach einem der vorhergehenden Ansprüche 6 bis 9, wobei
der dritte Sensor (S3) und/oder sechste Sensor zumindest doppelt vorhanden ist,
die von den dritten Sensoren (S3) erfassten Lenkwinkel und/oder die von den sechsten Sensoren erfassten Raddrehzahlen jeweils miteinander verglichen werden,
bei einer jeweiligen Übereinstimmung der durch die dritten Sensoren (S3) erfassten Lenkwinkel und/oder der durch die sechsten Sensoren erfassten Raddrehzahlen miteinander oder einer jeweiligen Abweichung voneinander innerhalb eines vorbestimmten Lenkwinkel-Toleranzbereichs und/oder Raddrehzahl-Toleranzbereichs ein Mittelwert der erfassten Lenkwinkel und/oder Raddrehzahlen als tatsächlicher Zustandswert des Rades (R) gebildet wird.

11. Verfahren nach einem der vorhergehenden Ansprüche, wobei
die tatsächlichen Zustandswerte des Rades (R) an eine Applikation zur Steuerung des Radantriebsmoduls weitergeleitet werden.

## Claims

1. A method for determining state values of a wheel (R) of a wheel drive module comprising the wheel (R), a speed modulation gearbox (G), a first electric motor (M1) and a second electric motor (M2), wherein the first and the second electric motors (M1, M2) are designed to drive the wheel (R) jointly by means of the speed modulation gearbox (G) about a wheel axis (A) and to steer it about a steering axis (L) orthogonal to the wheel axis (A), **characterized in that**
wheel drive module furthermore comprises at least one first sensor (S1) for sensing state values of the first electric motor (M1) and at least one second sensor (S2) for sensing state values of the second electric motor (M2) as well as
at least one third sensor (S3) for sensing state values of the wheel (R), and/or
a fourth and fifth sensor (S4, S5), wherein the fourth sensor (S4) senses state values of the first electric motor (M1), and the fifth sensor (S5) senses state values of the second electric motor (M2), so that the wheel drive module in a first configuration comprises at least one first sensor (S1), at least one second sensor (S2) and at least one third sensor (S3),
the wheel drive module in a second configuration comprises at least one first sensor (S1), at least one second sensor (S2) as well as a fourth and fifth sensor (S4, S5), and
the wheel drive module in a third configuration comprises at least one first sensor (S1), at least one second sensor (S2), at least one third sensor (S3) as well as a fourth and fifth sensor (S4, S5),
wherein, in the method for determining state values of the wheel drive module in the first configuration,
the state values determined by the first sensor (S1) and the state values determined by the second sensor (S2) as well as the state values determined by the third sensor (S3) and optional control signals for actuating the first and second electric motors (M1, M2) are each converted into a uniform unit,
wherein, in the method for determining state values of the wheel drive module in the second configuration,
the state values determined by the first sensor (S1) and the state values determined by the second sensor (S2) as well as the state values determined by the fourth sensor (S4) and the fifth sensor (S5) and optional control signals for actuating the first and second electric motors (M1, M2) are each converted into a uniform unit, wherein, in the method for determining state values of the wheel drive module in the third configuration,
the state values determined by the first sensor (S1) and the state values determined by the second sensor (S2) as well as the state values determined by the third sensor (S3) as well as the state values determined by the fourth sensor (S4) and the fifth sensor (S5) and optional control signals for actuating the first and second electric motors (M1, M2) are each converted into a uniform unit,
and the state values converted into the uniform unit are compared with each other, and, from the comparison, actual state values of the wheel (R) are determined.

2. The method according to the preceding claim, wherein
the actual state values are an actual wheel rotational speed of the wheel (R) about the wheel axis (A) and an actual steering angle of the wheel (R) about the steering axis (L).

3. The method according to any one of the preceding claims, wherein
the at least one first sensor (S1) and/or the at least one second sensor (S2) and/or the at least one third sensor (S3) are each present multiply.

4. The method according to any one of the preceding claims, wherein
the at least one first sensor (S1) senses a rotor position of a rotor of the first electric motor (M1) and/or a rotational speed of the first electric motor (M1), and
the at least one second sensor (S2) senses a rotor position of a rotor of the second electric motor (M2) and/or a rotational speed of the second electric motor (M2), and,
in the method, from the rotor position of the first electric motor (M1) and of the second electric motor (M2) and/or from the rotational speed of the first and the second electric motors (M1, M2), a calculated wheel rotational speed of the wheel (R) about the wheel axis (A) and/or a calculated steering angle of the wheel (R) about the steering axis (L) is/are determined.

5. The method according to any one of the preceding claims, wherein
the first and the second sensors (S1, S2), along with the respective electric motor (M1, M2) and the respective associated motor electronics (10, 20), are each designed as a respective subassembly, and
the fourth and fifth sensors (S4, S5) are arranged on the respective electric motor (M1, M2) outside of the respective subassembly.

6. The method according to any one of the preceding claims, wherein
the at least one third sensor (S3) senses a steering angle of the wheel (R) about the steering axis (L), and/or
a sixth sensor senses a wheel rotational speed of the wheel (R) about the wheel axis (A).

7. The method according to the preceding claim, wherein
the calculated wheel rotational speed is compared with the wheel rotational speed sensed by the sixth sensor, and/or
the calculated steering angle is compared with the steering angle sensed by the third sensor (S3).

8. The method according to the preceding claim, wherein
in case of agreement with one another of the calculated wheel rotational speed and of the wheel rotational speed sensed by the sixth sensor, or in the case of a deviation from one another of the calculated and the sensed wheel rotational speeds within a predetermined wheel rotational speed tolerance range, a mean value of the calculated and sensed wheel rotational speeds is formed as actual state value of the wheel (R).

9. The method according to the preceding Claim 6, wherein,
in case of agreement between the calculated steering angle and of the steering angle sensed by the third sensor (S3), or in the case of a deviation between the calculated and the sensed steering angles within a predetermined steering angle tolerance range, a mean value of the calculated and sensed steering angles is determined as actual state value of the wheel (R).

10. The method according to any one of the preceding claims 6 to 9, wherein
the third sensor (S3) and/or the sixth sensor is/are present at least in duplicate,
the steering angles sensed by the third sensors (S3) and/or the wheel rotational speeds sensed by the sixth sensors are in each case compared with each other,
in the case of a respective agreement between the steering angles sensed by the third sensors (S3) and/or of the wheel rotational speeds sensed by the sixth sensors, or in the case of a respective deviation from one another within a predetermined steering angle tolerance range and/or wheel rotational speed tolerance range, a mean value of the sensed steering angles and/or wheel rotational speeds is formed as actual state value of the wheel (R).

11. The method according to any one of the preceding claims, wherein
the actual state values of the wheel (R) are transferred to an application for the control of the wheel drive module.

## Revendications

1. Procédé de détermination de valeurs d'état d'une roue (R) d'un module d'entraînement de roue comprenant la roue (R), une transmission à superposition (G), un premier moteur électrique (M1) et un second moteur électrique (M2),
dans lequel le premier et le second moteur électrique (M1, M2) sont conçus pour entraîner ensemble la roue (R) au moyen de la transmission à superposition (G) autour d'un essieu de roue (A) et pour diriger un axe de direction (L) orthogonal à l'essieu de roue (A), **caractérisé en ce que**
le module d'entraînement de roue comprend également au moins un premier capteur (S1) pour détecter des valeurs d'état du premier moteur électrique (M1) et au moins un deuxième capteur (S2) pour détecter des valeurs d'état du second moteur électrique (M2) et
au moins un troisième capteur (S3) pour détecter des valeurs d'état de la roue (R) et/ou
un quatrième et un cinquième capteur (S4, S5), dans lequel le quatrième capteur (S4) détecte des valeurs d'état du premier moteur électrique (M1) et le cinquième capteur (S5) détecte des valeurs d'état du second moteur électrique (M2),
de sorte que, dans une première configuration, le module d'entraînement de roue comprend au moins un premier capteur (S1), au moins un deuxième capteur (S2) et au moins un troisième capteur (S3),
dans une deuxième configuration, le module d'entraînement de roue comprend au moins un premier capteur (S1), au moins un deuxième capteur (S2) et un quatrième et un cinquième capteur (S4, S5) et
dans une troisième configuration, le module d'entraînement de roue comprend au moins un premier capteur (S1), au moins un deuxième capteur (S2), au moins un troisième capteur (S3) et un quatrième et un cinquième capteur (S4, S5) et
dans lequel, dans le procédé de détermination de valeurs d'état du module d'entraînement de roue, dans la première configuration, les valeurs d'état déterminées par le premier capteur (S1) et le deuxième capteur (S2) et les valeurs d'état déterminées par le troisième capteur (S3) et éventuellement des signaux de commande pour commander le premier et le second moteur électrique (M1, M2) sont chacun convertis en une unité uniforme,
dans lequel, dans le procédé de détermination de valeurs d'état du module d'entraînement de roue, dans la deuxième configuration, les valeurs d'état déterminées par le premier capteur (S1) et le deuxième capteur (S2) et les valeurs d'état déterminées par le quatrième capteur (S4) et le cinquième capteur (S5) et éventuellement des signaux de commande pour commander le premier et le second moteur électrique (M1, M2) sont chacun convertis en une unité uniforme,
dans lequel, dans le procédé de détermination de valeurs d'état du module d'entraînement de roue, dans la troisième configuration, les valeurs d'état déterminées par le premier capteur (S1) et le deuxième capteur (S2) et les valeurs d'état déterminées par le troisième capteur (S3) et les valeurs d'état déterminés par le quatrième capteur (S4) et le cinquième capteur (S5) et éventuellement des signaux de commande pour commander le premier et le second moteur électrique (M1, M2) sont chacun convertis en une unité uniforme,
et les valeurs d'état converties dans l'unité uniforme sont comparées les unes aux autres et les valeurs d'état réelles de la roue (R) sont déterminées à partir de la comparaison.

2. Procédé selon la revendication précédente, dans lequel
les valeurs d'état réelles sont une vitesse de roue réelle de la roue (R) autour de l'essieu de roue (A) et un angle de direction réel de la roue (R) autour de l'axe de direction (L).

3. Procédé selon l'une des revendications précédentes, dans lequel
l'au moins un premier capteur (S1) et/ou l'au moins un deuxième capteur (S2) et/ou l'au moins un troisième capteur (S3) sont chacun présents par multiples.

4. Procédé selon l'une des revendications précédentes, dans lequel
l'au moins un premier capteur (S1) détecte une position de rotor d'un rotor du premier moteur électrique (M1) et/ou une vitesse du premier moteur électrique (M1), et
l'au moins un deuxième capteur (S2) détecte une position de rotor d'un rotor du deuxième moteur électrique (M2) et/ou une vitesse du deuxième moteur électrique (M2), et
dans le procédé à partir de la position du rotor du premier moteur électrique (M1) et du deuxième moteur électrique (M2) et/ou de la vitesse du premier et du deuxième moteur électrique (M1, M2), une vitesse calculée de la roue (R) autour de l'essieu de roue (A) et/ou un angle de direction calculé de la roue (R) autour de l'axe de direction (L) sont déterminés.

5. Procédé selon l'une des revendications précédentes, dans lequel
le premier et le deuxième capteur (S1, S2) sont conçus chacun comme un ensemble avec le moteur électrique respectif (M1, M2) et l'électronique de moteur associée respective (10, 20) et
les quatrième et cinquième capteurs (S4, S5) sont agencés sur le moteur électrique respectif (M1, M2) à l'extérieur de l'ensemble respectif.

6. Procédé selon l'une des revendications précédentes, dans lequel
l'au moins un troisième capteur (S3) détecte un angle de direction de la roue (R) autour de l'axe de direction (L) et/ou
un sixième capteur détecte une vitesse de la roue (R) autour de l'essieu de roue (A).

7. Procédé selon la revendication précédente, dans lequel
la vitesse de roue calculée est comparée à la vitesse de roue détectée par le sixième capteur et/ou
l'angle de direction calculé est comparé à l'angle de direction détecté par le troisième capteur (S3).

8. Procédé selon la revendication précédente, dans lequel
si la vitesse de roue calculée et la vitesse de roue détectée par le sixième capteur correspondent ou si la vitesse de roue calculée et la vitesse de roue détectée diffèrent l'une de l'autre d'une plage de tolérance de vitesse de roue prédéterminée, une valeur moyenne de la vitesse de roue calculée et détectée est formée en tant que valeur d'état réelle de la roue (R).

9. Procédé selon la revendication 6 précédente, dans lequel
si l'angle de direction calculé et l'angle de direction détecté par le troisième capteur (S3) correspondent ou si l'angle de direction calculé et l'angle de direction détecté diffèrent l'un de l'autre d'une plage de tolérance d'angle de direction prédéterminée, une valeur moyenne de l'angle de direction calculé et détecté est formée en tant que valeur d'état réelle de la roue (R).

10. Procédé selon l'une des revendications 6 à 9 précédentes, dans lequel
le troisième capteur (S3) et/ou le sixième capteur sont présents au moins deux fois,
les angles de direction détectés par les troisièmes capteurs (S3) et/ou les vitesses de roue détectées par les sixièmes capteurs sont chacun comparés entre eux,
si les angles de direction détectés par les troisièmes capteurs (S3) et/ou les vitesses de roue détectées par les sixièmes capteurs correspondent respectivement ou s'ils diffèrent respectivement l'un de l'autre d'une plage de tolérance d'angle de direction et/ou de plage de tolérance de vitesse de roue prédéterminée, une valeur moyenne des angles de direction et/ou des vitesses de roue détectés est formée en tant que valeur d'état réelle de la roue (R).

11. Procédé selon l'une des revendications précédentes, dans lequel
les valeurs d'état réelles de la roue (R) sont transmises à une application de commande du module d'entraînement de roue.
